(19) Europäisches Patentamt

European Patent Office

Office européen des brevets

(11) **EP 1 343 735 B1**

(12) **EUROPÄISCHE PATENTSCHRIFT**

(45) Veröffentlichungstag und Bekanntmachung des Hinweises auf die Patenterteilung:
**02.06.2004 Patentblatt 2004/23**

(51) Int Cl.⁷: **C04B 35/56**
// **C22C29:08**

(21) Anmeldenummer: **01271336.8**

(22) Anmeldetag: **20.12.2001**

(86) Internationale Anmeldenummer:
**PCT/AT2001/000399**

(87) Internationale Veröffentlichungsnummer:
**WO 2002/049986 (27.06.2002 Gazette 2002/26)**

(54) **VERFAHREN ZUR HERSTELLUNG VON WOLFRAMCARBID**

METHOD FOR PRODUCING TUNGSTEN CARBIDE

PROCEDE DE PRODUCTION DE CARBURE DE TUNGSTENE

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **20.12.2000 AT 21152000**

(43) Veröffentlichungstag der Anmeldung:
**17.09.2003 Patentblatt 2003/38**

(73) Patentinhaber: **Treibacher Industrie AG**
**A-9330 Treibach-Althofen (AT)**

(72) Erfinder:
• **ECKHART, Jürgen**
**A-9330 Althofen (AT)**
• **LEITNER, Jürgen**
**verstorben (AT)**
• **RABITSCH, Kurt**
**A-9330 Althofen (AT)**

(74) Vertreter: **Schwarz, Albin, Dr. et al**
**Kopecky & Schwarz**
**Patentanwälte**
**Wipplingerstrasse 32/22**
**1010 Wien (AT)**

(56) Entgegenhaltungen:
**EP-A- 0 834 589        EP-A- 1 016 624**
**WO-A-93/10042**

• **DEUTSCHE CHEMISCHE GESELLSCHAFT:**
**"Gmelins Handbuch der anorganischen Chemie, System-Nr 54: Wolfram, Hauptband, 8.Auflage" 1933 , VERLAG CHEMIE GMBH , WEINHEIM XP002192955 Seite 190, Zeile 2-10**

**Beschreibung**

Die Erfindung betrifft ein Verfahren zur Herstellung von Wolframcarbid mittels Gasphasendirektcarburierung eines pulverförmigen, wolframoxidhältigen Ausgangsmaterials, wobei das Ausgangsmaterial bei erhöhter Temperatur mit einem Reaktionsgas umgesetzt wird.

Verschleißfeste und harte Werkzeuge werden in großem Umfang aus Hartmetall hergestellt. Hartmetall ist ein pulvermetallurgisch hergestellter Verbundwerkstoff aus einer den Verschleiß tragenden Hartstoffphase und einem zähen Binder. Wegen herausragender Materialeigenschaften besteht bei dem überwiegenden Teil der produzierten Hartmetalle die Hartstoffphase aus Wolframcarbid und die Binderphase aus Kobalt.

Eine Optimierung dieses Verbundwerkstoffes in Richtung höherer Härte und verbesserter Zähigkeit erfolgt durch den Einsatz immer feinerer Wolframcarbide. Die Anforderungen an diese neuen feinen Rohstoffe sind:

- Die Hartstoffphase muss mit den derzeit konventionellen großtechnischen Verarbeitungsschritten verwendbar sein: Nassmahlen mit Kobalt, danach Trocknen und teilweise Granulieren des Ansatzes, gefolgt von Verpressen oder Extrudieren zu Rohlingen und anschließendem Sintern.

- Einphasiger Rohstoff mit genau eingestelltem gebundenem Kohlenstoffgehalt ohne Anteil an freiem Kohlenstoff.

- Kleine homogene Partikelgrößen mit einer besonders engen Korngrößenverteilung.

- Das Produkt soll im Ansatz mit Kobalt beim Sintern keine ungleichen Wachstumsphänomene einzelner Partikel aufweisen.

- Als Rohstoff für die Produktion dieser Hartstoffphase soll ein am Weltmarkt leicht verfiigbares Zwischenprodukt einsetzbar sein.

- Die Kosten für die Herstellung dieses Hartstoffes haben im wirtschaftlichen Rahmen zu bleiben, damit kein Ersatzwerkstoff gefunden werden muss.

Ein Verfahren zur Herstellung von Wolframcarbid, welches im industriellen Maßstab zumeist angewandt wird, ist aus Ullmann's Encyclopedia of Industrial Chemistry, 5th Edition, Vol. A5, VCH, bekannt. Dieses Verfahren schließt zwei Verfahrensschritte, ausgehend von Wolframblau- oder Wolframgelboxid, ein.

Im ersten Schritt erfolgt die Reduktion von Wolframblauoxid oder Wolframgelboxid mit Wasserstoff. Dazu wird das Ausgangsmaterial in Schiffchen durch einen Stoßofen geschickt oder durch einen Drehrohrofen rieseln gelassen. Wasserstoff wird dabei meist im Gegenstrom aufgegeben. Dieser reduziert das Oxid unter Bildung von Wasserdampf. Die Komgrößeneinstellung erfolgt durch die Einstellung des Wasserdampfpartialdruckes. Trockene Bedingungen, die durch geringe Wolframoxidaufgaben, hohe Wasserstoffströme und niedere Temperaturen gegeben sind, führen zu feinem Wolframpulver. Nasse Bedingungen mit hohen Oxidaufgaben, niederen Wasserstoffströmen und hohen Temperaturen führen zu grobem Wolframpulver.

Im zweiten Schritt wird das erhaltene Wolframpulver mit Ruß in einem bestimmten Verhältnis vermengt und bei Temperaturen von ca. 1200°C - 2000°C in einem Stoßofen carburiert. Die Komgröße des so erhaltenen WC-Pulvers wird dabei schon im ersten Prozessschritt, nämlich bei der Reduktion, bestimmt.

Das Verfahren ist bei der Herstellung von Standardkorngrößen im Bereich von 2 - 6 µm wirtschaftlich, stößt jedoch bei der Herstellung sehr kleiner Korngrößen (< 1 µm) an die Grenzen der Rentabilität, weil die Wolframoxidaufgaben immer weiter reduziert werden müssen. Weiters nachteilig bei diesem Verfahren sind die pyrophoren Eigenschaften des erzeugten Wolframpulvers, die besonders bei Korngrößen < 1 µm die Handhabung dieses Pulvers sehr schwierig und bei noch kleineren Korngrößen auch gefährlich machen.

Weiters sind Direktcarburierungsverfahren bekannt, bei denen nicht zuerst wolframoxidhältiges Pulver zu Wolfram reduziert und dann mit Ruß carburiert wird, sondern das oxidhältige Ausgangsmaterial direkt mit Kohlenstoffträgern zu WC reagiert.

Die Reaktionskinetik der Gasphasencarburierung mit einem Wasserstoff/Methan-Gemisch wird in Metallurgical Transactions B, Vol. 9B, 1978, Seiten 553-557 beschrieben. Der Phasenübergang eines W-Co-Oxid-Gemisches während der Direktreduktion/Karburierung mit Wasserstoff/Methan ist aus Transactions of Nfsoc, Vol. 5, Nr. 3, 1995, Seiten 554-560 bekannt. Die Kinetik und Thermodynamik der Wolframtrioxid-Reduktion/Karburierung mit einem CO/$CO_2$-Gemisch wird im International Journal of Mineral Processing, 20, 1987, Seiten 137-151 beschrieben. Morphologische Studien der Karburierung/Reduktion von Wolframoxiden mit Kohlenmonoxid sind aus Metallurgical Transactions B, Vol. 9B, 1978, Seiten 603-613 bekannt.

In der JP-A - 3252306 ist ein Verfahren beschrieben, gemäß welchem $WO_3$-Pulver und Ruß in einem bestimmten Verhältnis unter Zugabe von Wasser vermischt, pelletiert und getrocknet werden. Die Direktcarburierung erfolgt in zwei nacheinander geschalteten Drehrohren, wobei im ersten Drehrohr die Reduktion unter Stickstoffatmosphäre bei Temperaturen von 1000°C bis 1600°C abläuft, im zweiten die Carburierung unter Wasserstoff bei 1400°C bis 2000°C. Die wasserstofffreie Reduktion im ersten Drehrohr verhindert das Kristallwachstum des Wolframpartikels. Der Reaktionsweg verläuft über die Route $WO_3 \rightarrow WO_{2,9} \rightarrow WO_{2,72} \rightarrow WO_2 \rightarrow W \rightarrow W_2C \rightarrow WC$. Um die Kohlenstoffbilanz richtig zu treffen (ca. 6,13 Gew.% C), ist eine exakte Kontrolle der Temperaturen und Atmosphären in dem Zweistufenprozess notwendig. Das nach diesem Verfahren hergestellte WC weist eine spezifische Oberfläche von 3,0 bis 3,5 $m^2$/g und eine Korngröße von 0,15 µm auf.

Einer der Nachteile dieses Verfahrens besteht darin, dass es aus mehreren Stufen besteht. Weiters erfordert dieses Verfahren sehr hohe Anlagentemperaturen und stellt damit hohe Anforderungen an die Anlage. Zudem ist ein Agglomerieren des Ausgangsoxids mit dem Kohlenstoffmaterial vor der Carburierung erforderlich.

Der "Rapid Carbothermal Reduction" (RCR) - Prozess, bekannt aus der US-A - 5,380,688, ist eine Variante der Direktcarburierung, bei der feinkörniges WC-Pulver kontinuierlich durch eine extrem schnelle carbothermische Reduktion von Wolframoxid in einem Fallreaktor aus Graphit hergestellt wird.

Das Verfahren läuft in zwei Stufen ab: Die erste Stufe ("entrainment method") liefert ein unterstöchiometrisches $WC_{1-x}$-Pulver. Dazu fällt das $WO_3$/C-Pulvergemisch aufgrund der Schwerkraft durch einen vertikalen Röhrenofen unter Inertgasatmosphäre bei Temperaturen von 1800°C bis 2000°C. Die Aufheizrate liegt zwischen 10 000 und 100 000 000 K/s, die Verweilzeit der Teilchen in der Heizzone bei ca. 0,2 bis 10 Sekunden, wodurch eine sehr kleine Korngröße erreicht wird. Im zweiten Schritt wird die noch notwendige Kohlenstoffmenge hinzugefügt. Das Gemisch fällt in einen erhitzten Tiegel ("drop method"). Die Heizrate beträgt etwa 100 bis 10 000 K/s, die Verweilzeit liegt zwischen 5 Minuten und 2 Stunden. Das nach diesem Verfahren hergestellte Wolframcarbid weist eine Korngröße von 0,2 bis 0,4 µm auf.

Nachteilig besteht auch dieses Verfahren aus mehr als einer Stufe. Aufgrund der hohen Prozesstemperaturen sind die Anforderungen an die Anlage sehr hoch. Ein weiterer Nachteil ist darin zu sehen, dass das Material nach der ersten Stufe analysiert werden muss, um die noch benötigte Kohlenstoffmenge zu bestimmen.

Im Stand der Technik sind darüber hinaus Verfahren bekannt, bei welchen anstelle von Ruß als Reduktions- und Carburierungsmittel der benötigte Kohlenstoff durch gasförmige Kohlenstofflräger (Kohlenwasserstoffgas, CO/$CO_2$-Gemische) in reduzierender Atmosphäre zur Verfugung gestellt wird. Diese Verfahren erfuhren bislang jedoch keine großtechnische Umsetzung.

Ein Verfahren zur Herstellung von Wolframcarbid ist auch aus der WO-A - 93/10042 bekannt. Nach diesem Verfahren wird Wolframcarbid-Pulver mit einem durchschnittlichen Korndurchmesser von 0,05 bis 0,2 µm erhalten. Die Umsetzung von $WO_3$ zu WC findet in zwei Prozessabschnitten in einer strömenden Atmosphäre, bestehend aus molekularem Wasserstoff und 3 bis 8 Vol.% molekularem Methan, statt.

Der erste Teil des Prozesses besteht in der Reduktion. Hierzu wird das Pulver mit 5°C bis 50°C pro Minute von 25°C auf 535°C erhitzt. Im zweiten Teil (Carburierung) wird mit einer Heizrate von 1°C bis 10°C pro Minute auf 850°C weiter erhitzt. Nach Erreichen der Temperatur von 850°C wird diese Temperatur so lange gehalten, bis die Umwandlung des Ausgangsmaterials in WC vollständig ist. Diese Zeitdauer liegt typischer Weise zwischen 15 Minuten und 3 Stunden.

Gemäß den in dieser Patentschrift angeführten Beispielen sind die Versuche nur im Gramm - Maßstab in Thermoanalysewaagen und in einem Kleinstlaborofen durchgeführt worden.

Nachteilig bei diesem Verfahren ist, dass es für den Fachmann nicht nachvollziehbar ist, wie die vorgeschriebene exakte Temperatürführung und Einhaltung des Wasserdampfpartialdrucks im Bereich einer technisch interessanten Menge einer Pulverschüttung in herkömmlichen Produktionsanlagen erreicht werden kann. Weiters ist aus der Beschreibung keine Methode ableitbar, mit welcher die Korngröße im angegebenen Bereich gezielt eingestellt werden kann.

In der EP-A - 1016 624 ist ein Gascarburierungsverfahren zur Herstellung von feinkörnigem WC-Pulver aus nicht granuliertem, fließfähigem Wolfram- oder wolframoxidhältigem Pulver mit einer mittleren Korngröße $d_{50} > 10$ µm in Fließbettreaktoren beschrieben. Das zu carburierende Gut wird in einer Wirbelschicht-Reaktionskammer unter Schutzgasatmosphäre mit einer Aufheizgeschwindigkeit zwischen 1°C und 50°C pro Minute stetig auf eine konstante Prozesstemperatur von 900°C bis 1200°C gebracht. Nach Erreichen dieser Prozesstemperatur wird auf das Prozessgas umgeschaltet. Dieses besteht aus 10 bis 100 Vol.% $CO_x$ (x = 1 oder 2), der Rest ist $H_2$ oder 0,1 bis 5 Vol.% Kohlenwasserstoffgas. Gegebenenfalls werden kleine Anteile an $H_2O$-Dampf hinzugefiigt. Die Kohlenstoffaktivität $a_c$ soll bei Prozesstemperatur während der gesamten Prozessdauer < 1 und möglichst nahe bei 1 liegen. Diese letztgenannte Forderung schließt die Herstellung von Wolframcarbid mit einem aus 100 %.CO bestehendem Prozessgas aus, weil sich hieraus eine Kohlenstoffaktivität $a_c > 1$ ergibt.

Das so erhaltene WC-Pulver weist laut Beschreibung keine in einer XRD (Röntgendiffraktometrie) - Analyse nachweisbaren Fremdphasen auf, besitzt eine mittlere Primärkorngröße $> 0,2$ µm und $< 5$ µm, einen Carburierungsgrad von $> 96$ % und einen freien Kohlenstoffgehalt von $< 0,1$ Gew.%.

Als vorteilhafte Prozessdauer werden für den Fall, dass von W-Pulver als dem zu carburierenden Gut ausgegangen wird, Zeiten < 60 Minuten angegeben. Wird von wolframoxidhältigem Pulver ausgegangen, soll die Prozessdauer bei Zeiten < 100 Minuten liegen.

Nachteilig an dem beschriebenen Verfahren ist, dass für den Fachmann keine Methode ableitbar ist, mit welcher die Korngröße im angegebenen Bereich gezielt eingestellt werden kann. So ist aus der Beschreibung nicht ableitbar, wie aus Wolframoxid ein WC < 0,55 μm hergestellt werden kann. Weiters nachteilig ist, dass gemäß eigenen Erfahrungen mit den in diesem Dokument genannten bevorzugten Parametern bei Temperaturen von > 900°C die Reduktionseigenschaften des Kohlenmonoxids gegenüber dem Carburierungsvermögen überwiegen. So entstand in eigenen Versuchen bei so hohen Temperaturen Wolframmetall anstelle von Wolframcarbid. Ebenfalls nachteilig ist, dass sich durch die geoffenbarte Wahl der Gaszusammensetzung unter Zugabe von Kohlenwasserstoffen, Wasserstoff oder Wasserdampf feuchte Bedingungen ergeben, die zu Wachstumsphänomenen über die Gasphase durch Bildung von Wolframoxidhydrat führen.

Ein Verfahren der eingangs beschriebenen Art ist aus der WO-A - 00/29325 bekannt. Bei diesem Verfahren wird eine im wesentlichen vollständige Carburierung von Wolframvorläuferverbindungen im Temperaturbereich von 800°C bis 1000°C, vorzugsweise 850°C bis 950°C, erzielt, wobei als Reaktionsgas ein $CO/CO_2$-Gemisch eingesetzt wird. Dieses Carburierungsgas weist einen $CO_2$-Gehalt, bezogen auf CO und $CO_2$ auf, der bei Carburierungstemperatur oberhalb des Boudouard - Gleichgewichts liegt, d.h. es liegt eine Kohlenstoffaktivität $a_c$ kleiner 1 vor.

Wolframoxid-Pulver wird in einem Sinterofen unter $N_2$-Atmosphäre erhitzt, bei einer Temperatur von 500°C auf das Reaktionsgas umgeschaltet und auf die bevorzugte Reaktionstemperatur von 900°C bis 950°C weiter erhitzt. Während der Reaktion soll das $CO_2$/CO-Partialdruckverhältnis 1:8 nicht überschreiten. Um dieses $CO_2$/CO-Verhältnis aufrechtzuerhalten, wird das während der Reduktion und Carburierung gebildete $CO_2$ abgezogen. Die Carburierungsdauer bei Carburierungstemperatur beträgt bevorzugt 5 bis 8 Stunden.

Im Anschluss an die Carburierung wird eine Wärmebehandlung der erhaltenen Wolframcarbide durchgeführt. Dazu werden die Wolframcarbide in einem Durchschubofen für eine Dauer von vorzugsweise 25 bis 50 Minuten bei bevorzugten Temperaturen von 1350°C bis 1450°C wärmebehandelt.

Das beschriebene Wolframcarbid ist gekennzeichnet durch eine Beziehung von Kohärenzlänge x und Gitterverzerrung y gemäß folgender Formeln:

$$y < (-4{,}45 * 10^{-4}\ nm^{-1} * x + 0{,}113)\ \%$$

$$y < (-2{,}5 * 10^{-4}\ nm^{-1} * x + 0{,}1025)\ \%$$

und

$$y < (-7{,}78 * 10^{-4}\ nm^{-1} * x + 0{,}1395)\ \%$$

Nachteilig an dem beschriebenen Verfahren ist, dass für den Fachmann keine Methode ableitbar ist, mit welcher die Korngröße im angegebenen Bereich gezielt eingestellt werden kann.

Die Erfindung bezweckt die Überwindung der oben genannten Probleme und Nachteile und stellt sich die Aufgabe, ein Verfahren bereitzustellen, das die Herstellung von submikronem Wolframcarbidpulver mit definierter FSSS(=Fisher Sub Sieve Size) - Korngröße auf ökonomische, ökologische und effiziente Weise ermöglicht. Insbesondere soll die Herstellung in einem einzigen Prozessschritt erfolgen und eine FSSS-Korngröße, speziell im Bereich von 0,3 bis 0,9 μm, reproduzierbar eingestellt werden können. Weiters sollen die Anforderungen an die Produktionsanlage hinsichtlich der thermischen Belastung geringer als im Stand der Technik sein.

Diese Aufgabe wird erfindungsgemäß dadurch gelöst, dass das wolframoxidhältige Ausgangsmaterial auf mindestens 600°C erhitzt und anschließend unter Steigerung der Höchsttemperatur auf maximal 850°C mit dem Reaktionsgasgemisch umgesetzt wird, wobei ein Reaktionsgas eingesetzt wird, das aus CO besteht oder ein CO/ $H_2$-Gasgemisch mit bis zu 20 Vol.% $H_2$ ist. Es ist dem Fachmann klar, dass sich bei den angegebenen Reaktionstemperaturen aus dem eingesetzten CO gemäß dem Boudouard-Gleichgewicht C und $CO_2$ bildet, die dann im Reaktionsgemisch ebenso vorhanden sind.

Bevorzugte Ausführungsformen der Erfindung sind in den abhängigen Ansprüchen angeführt.

Gegenstand der Erfindung ist auch ein Wolframcarbid, das nach dem erfindungsgemäßen Verfahren erhältlich ist, sowie ein Hartmetall, welches unter Verwendung dieses Wolframcarbids gefertigt ist.

Das erfindungsgemäße Wolframcarbid ist ferner dadurch gekennzeichnet, dass es einen Gitterabstand x in c-Richtung von 2,850 < x ≤ 2,870 Angström (Å) aufweist.

Eine bevorzugte Ausführungsform des erfindungsgemäßen Wolframcarbids ist dadurch gekennzeichnet, dass der Gehalt an gebundenem Kohlenstoff im Bereich von 5,86 Gew.-% bis 6,08 Gew.-% ist und dass es einphasig ausgebildet ist. Der Begriff "einphasig" im Sinne der vorliegenden Beschreibung und Patentansprüche bedeutet, dass mittels der unten beschriebenen Standard-Röntgendiffraktometrie keine $W_2C$-Phase nachzuweisen ist.

Wolframcarbid, welches nach den im Stand der Technik bekannten Verfahren hergestellt wird, weist bei einem Gehalt an gebundenem Kohlenstoff von 6,0 % einen $W_2C$-Gehalt von etwa 4,4 % auf. Diese Fremdphase ist für die Verarbeitung des Wolframcarbids zu Hartmetall nachteilig.

Eine weiters bevorzugte Ausführungsform des erfindungsgemäßen Wolframcarbids besteht darin, dass es in Plättchenform vorliegt und nach einem Verfahren erhältlich ist, bei dem ein Reaktionsgas verwendet wird, welches aus CO besteht.

Abhängig vom Reaktionsgas gibt es zwei verschiedene Reaktionswege des wolframoxidhältigen Ausgangsmaterials zu Wolframcarbid, die jeweils zu unterschiedlichen Korngrößen führen. Die resultierende Korngröße des WC-Pulvers hängt hauptsächlich von zwei Prozessparametern ab: Temperatur und Wasserdampfpartialdruck. Zur Komvergröberung führen sowohl hohe Prozesstemperaturen als auch ein hoher Wasserdampfpartialdruck.

Gemäß vorliegender Erfindung findet die Direktcarburierung bei relativ tiefen Temperaturen, nämlich von 600°C bis max. 850°C, statt, um ein möglichst feines Korn zu erhalten. Das Starten der Reaktion bei einer tiefen Temperatur (600°C) ist ein wesentlicher Punkt bei der Produktion sehr kleiner Korngrößen. Es hat sich gezeigt, dass dadurch die Exothermie und die Heftigkeit der Reaktion abgeschwächt wird und die Bildung von Agglomeraten verhindert werden kann. Die gewünschte Komvergröberung im Bereich von 0,3 bis 0,9 µm (gemessen mittels Fisher Sub Sieve Size, FSSS) wird mittels Einstellung eines geeigneten Wasserdampfpartialdrucks durch die exakte Zudosierung von Wasserstoff zum Reaktionsgas erreicht.

Bei der Reaktion mit 100 % CO als Reaktionsgas dient das CO sowohl als Reduktions- als auch als Carburierungsmittel. Als einziges gasförmiges Reaktionsprodukt entsteht $CO_2$ das nicht zur Komvergröberung beiträgt. Bei dieser "trockenen" Direktcarburierung verläuft die Reaktionsroute via:

$$WO_{2,9} \rightarrow W_{18}O_{49}\ (WO_{2,72}) \rightarrow WO_2 \rightarrow W \rightarrow W_2C \rightarrow WC$$

Durch die Kombination von tiefen Reaktionstemperaturen und dem Fehlen von Wasserdampf wird, wie im nachstehenden Beispiel 1 erläutert, die kleinste FSSS-Korngröße von 0,35 µm erreicht.

Durch Dotieren des Wolframoxids mit chromhältigen und/oder vanadiumhältigen Verbindungen wird bei den oben genannten, trockenen Reaktionsbedingungen ein noch feineres Pulver erhalten, für das eine Charakterisierung der Korngröße nach der FSSS-Methode jedoch nicht mehr sinnvoll ist.

Die Direktcarburierung mit einem Kohlenmonoxid/Wasserstoff-Gasgemisch liefert im Reduktionsschritt als gasförmiges Reaktionsprodukt Wasserdampf.

$$WO_3 + 3H_2(g) \leftrightarrow W + 3H_2O(g)$$

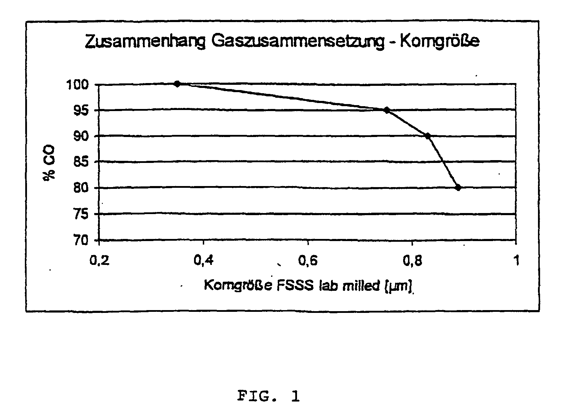

Bei dieser "feuchten" Direktcarburierung erfolgt die Reduktion teilweise nach dem Mechanismus des CVT ("chemical vapour transport")-Prozesses (Erik Lassner, Wolf-Dieter Schubert; "Tungsten, Properties, Chemistry, Technology of the Element, Alloys and Chemical Compounds", Kluwer Academic / Plenum Publishers, New York 1999), wodurch eine Steuerung der Korngröße möglich wird. Je größer das Angebot an Wasserstoff, desto größer der Wasserdampfpartialdruck und desto größer wiederum die Korngröße. Dieser Zusammenhang ist graphisch in Figur 1 dargestellt, welche die Korngröße der in den Beispielen 1, 2, 3 und 5 hergestellten, erfindungsgemäßen Wolframcarbide zeigt.

Während der Reaktion gezogene und mittels Röntgendiffraktometrie analysierte Proben zeigen, dass das zu carburierende Gut, im Gegensatz zum zitierten Stand der Technik, nicht erst vollständig reduziert und dann erst carburiert wird (EP-A -1 016 624), sondern dass die Reduktion und die Carburierung unter erfindungsgemäßen Reaktionsbedingungen stets parallel erfolgen. Wie in Beispiel 1 erläutert, werden bereits bei der ersten Probenahme W und $W_2C$ detektiert; der größte Teil des Materials liegt noch als Oxid vor.

Überraschend in vorliegender Erfindung waren auch die Reaktionszeiten im Vergleich zum zitierten Stand der Technik. Es werden dort überaus schnelle Reduktionen und relativ langsame Carburierungen dargestellt. So offenbart die Patentanmeldung EP-A - 1 016 624 in ihrer Beschreibung, dass die Prozessdauer < 60 Minuten beträgt, falls von W-Pulver als dem zu carburierenden Gut ausgegangen wird, und sie beträgt < 100 Minuten, falls von wolframoxidhältigem Pulver ausgegangen wird. Das lässt den Rückschluss zu, dass die vollkommene Reduktion des Wolframoxids zu W-Pulver innerhalb von 40 % der Reaktionsdauer stattfindet und die Carburierung 60 % der Reaktionsdauer benötigt.

Es hat sich nun in vorliegender Erfindung gezeigt, dass in den ersten 80 % der Reaktionsdauer das Wolfram größtenteils oxidisch vorliegt, mit zunehmender Reaktionsdauer innerhalb dieser 80 % steigt natürlich der Anteil an W, $W_2C$ und WC. Die vollständige Umwandlung des Wolframs und des $W_2C$ in WC erfolgt sehr schnell in den letzen 20 % der Reaktionsdauer. Die im Stand der Technik zitierten, zu vorliegender Erfindung gegenteiligen Zeitangaben lassen sich damit begründen, dass die Versuche und Untersuchungen, die den Stand der Technik begründen, fast ausschließlich auf Thermoanalysegeräten im Gramm-Maßstab durchgeführt wurden, deren Ergebnisse sich nicht ohne Probleme auf Untersuchungen im Pilotmaßstab übertragen lassen.

Das erfindungsgemäße Verfahren lässt sich sowohl kontinuierlich als auch batch-weise ausführen. Im Fall eines kontinuierlichen Betriebs muss dafür gesorgt sein, dass das aus dem Reaktor austretende Gut unter Schutzgasatmosphäre abkühlen kann, weil sonst die Rückoxidation zu Wolframoxid erfolgt. Wird das Verfahren batch-weise betrieben, so wird nach Ende der Reaktion das Prozessgas weggeschaltet, und das Produkt kühlt unter Schutzgasspülung im Wirbelschichtreaktor ab.

Als Ausgangsmaterial für das erfindungsgemäße Verfahren eignen sich Wolframgelboxid, Wolframblauoxid und Ammoniumparawolframat. Diese Materialien können auch schon vor der Direktcarburierung mit chromhältigen oder vanadiumhältigen Verbindungen dotiert werden, wodurch sich noch feinere Korngrößen einstellen lassen.

Eine Messung der Gitterkonstanten des erfindungsgemäß erzeugten Materials mittels Röntgendiffraktion ergab gegenüber in der einschlägigen Literatur publizierten Daten eine Vergrößerung der Gitterkonstante c, welche zu einer Charakterisierung des neuartigen Materials herangezogen werden kann.

Die Erfindung wird nachfolgend anhand von Beispielen weiter veranschaulicht.

Die Untersuchung auf Einphasigkeit wurde mittels Röntgendiffraktometrie mit einem Gerät der Fa. Phillips (Typ: PW 1080) vorgenommen. Das Gerät besteht aus dem Generator PW 1732/10, der Diffraktometrie-Röhre mit Cu-Anode PW 2272/20 (max. Belastung 2,2 kW), dem Goniometer PW 1050/37, der Diffraktometerkontrolleinheit PW 3710, dem Display PW 3719 für Winkel und Impulse. Typische Messbedingungen für die Messung von $W_2C$ in WC:

| | |
|---|---|
| Startwinkel | 38,5° |
| Endwinkel | 41,0° |
| Schrittweite | 0,020° |

Die Gitterkonstanten wurden mit einem Pulverdiffraktometer der Type Siemens D501 mittels Theta/2Theta Scans gemessen (Messbedingungen: Strahlung: CuK alpha; Monochromatisierung: Ni-Filter, Divergenzblenden: 1°; Detektoreingangsblende: 0,15°; Schrittweite im Theta/2Theta Scan: 0,05°; Messzeit pro Messschritt: 1s).

Beispiel 1:

In einem Wirbelschichtofen (Durchmesser 150 mm) wurden 5 kg technisches Wolframblauoxid unter Ar-Spülung (13 l/min) fluidisiert, innerhalb von 40 Minuten auf eine Temperatur von 300°C aufgeheizt und bei dieser Temperatur 45 Minuten gehalten, um restliches Ammoniak auszutreiben. Nach diesem Haltepunkt wurde das Wolframblauoxid auf 600°C weiter aufgeheizt (Zeitdauer 1 Stunde). Bei Erreichen dieser Temperatur wurde auf das Prozessgas (100 % CO, 15 l/min) umgeschaltet und mit einer Aufheizrate von 40°C/Stunde auf die Prozesstemperatur von 820°C weiter erhitzt. Bei dieser Temperatur wurde der CO-Durchsatz auf 22 l/min erhöht. Nach 10 Stunden bei 820°C war die Reaktion beendet. Während des Prozesses wurden zwei Proben genommen; die erste 4 Stunden nach Umschalten auf das Reaktionsgas, die zweite 2 Stunden vor dem Reaktionsende. Die Analyse der ersten Probe zeigte hauptsächlich $WO_2$ und $W_{18}O_{49}$ ($WO_{2,72}$) und Spuren von $W_2C$. Die zweite Probe bestand hauptsächlich aus $W_2C$, in ungefähr gleichen Mengenanteilen lagen noch $WO_2$, W und WC vor: Nach Wegschalten des Reaktionsgases kühlte der Ofen unter Ar-Spülung auf Raumtemperatur ab. Ausbeute waren ungefähr 3 kg Pulver (Rest Austrag), das mittels Röntgendiffraktometrie als phasenreines Wolframcarbid identifiziert werden konnte und das sich durch folgende Analysenwerte auszeichnete:

$C_{ges}$: 6,06 %
$C_{frei}$: 0,03 %
O: 0,38 %
FSSS ASTM B 330 - 88: 4,5 µm
FSSS lab milled ASTM B 430 : 0,35 µm

Von diesem WC wurden die Gitterkonstanten bestimmt und mit den Literaturdaten verglichen. Für die Gitterkonstante a wurde der Wert 2,901 Å ± 0,001 Å bestimmt, der den Literaturdaten entspricht. Für den Wert der Gitterkonstanten c wurde eine Vergrößerung gegenüber den Literaturdaten festgestellt; der Wert für c beträgt 2,862 Å ± 0,001 Å.

Literaturdaten (jeweils in Å) für auf konventionellem Weg hergestelltes WC:

ICSD (Inorganic Crystal Structure Database) (Fachinformationszentrum Karlsruhe / Deutschland in Zusammenarbeit mit National Institute of Standard and Technology / USA, Version 1997)

a = 2,906    c = 2,836    (Jahr 1946)
a = 2,907    c = 2,836    (Jahr 1961)

JCPDS-Intemational Centre for Diffraction Data

| JCPDS No. | c | Jahr |
|---|---|---|
| 02-1055 | 2,85 | 1926 |
| 03-1096 | 2,8366 | 1954 |
| 05-0728 | 2,84 | 1949 |
| 25-1047 | 2,8378 | 1973 |
| 72-0097 | 2,8366 | 1961 |
| 73-0471 | 2,8369 | 1947 |

Beispiel 2:

Der Versuch wurde analog wie in Beispiel 1 durchgeführt, jedoch hatte das Prozessgas folgende Zusammensetzung: 95 % CO und 5 % $H_2$. Bei Erreichen der Starttemperatur von 600°C wurde auf das Prozessgas umgeschaltet und mit einer Aufheizrate von 45°C/Stunde auf die Reaktionstemperatur von ebenfalls 820°C weiter aufgeheizt. Der maximale CO-Durchsatz war in der Höhe von 24 l/min. Die Reaktionsdauer bei dieser Temperatur betrug 9 Stunden. Analysenwerte:

$C_{ges}$: 5,74 %
$C_{frei}$: 0,07 %
O: 0,41 %
FSSS ASTM B 330 - 88: 3,85 $\mu$m
FSSS lab milled ASTM B 430 : 0,75 $\mu$m

Beispiel 3:

Einsatzmaterial und Haltepunkt waren dieselben wie in Beispiel 1, das Prozessgas bestand jedoch aus 90 % CO und 10 % $H_2$. Von der Starttemperatur (600°C) weg wurde mit 54°C/Stunde auf die Prozesstemperatur von diesmal 800°C aufgeheizt. Die Reaktion bei 800°C dauerte 12 Stunden (CO-Durchsatz 16 l/min). Nach Abkühlen auf Raumtemperatur unter Ar-Spülung erhielt man ein Wolframcarbid mit folgenden Analysenwerten:

$C_{ges}$: 6,07%
$C_{frei}$: 0,07%
FSSS ASTM B 330 - 88: 3,95 $\mu$m
FSSS lab milled ASTM B430 : 0,83 $\mu$m
Gitterkonstante a: 2,903 Å $\pm$ 0,001 Å
Gitterkonstante c: 2,851 Å $\pm$ 0,001 Å

Es konnte keine $W_2C$-Phase festgestellt werden.

Beispiel 4:

Einsatzmaterial waren 7,5 kg Wolframblauoxid, um genügend Material für Hartmetallversuche zu produzieren. Haltepunkt und Prozessgas waren dieselben wie in Beispiel 1. Von der Starttemperatur (600°C) weg wurde mit 54°C/Stunde auf die Prozesstemperatur von diesmal 800°C aufgeheizt. Die Reaktion bei 800°C dauerte 12 Stunden (CO-Durchsatz 16 l/min). Nach Abkühlen auf Raumtemperatur unter Ar-Spülung erhielt man ein Wolframcarbid mit folgenden Analysenwerten:

$C_{ges}$: 6,01 %
$C_{frei}$: <0,02 %
O: 0,28 %
FSSS ASTM B 330 - 88: 4,4 µm
FSSS lab milled ASTM B430 : 0,35 µm

Aus diesem WC wurde ohne weitere Vorbehandlung in einem Laborattritor 0.4 kg Hartmetallansatz mit 10 % Co und 0,8 % VC durch 5 h Mahlen mit Hartmetallkugeln in Ethanol hergestellt. Der Ansatz wurde vakuumgetrocknet, pelletiert, gepresst und bei 13 80°C 90 min (davon 30 min bei 30 bar Ar) gesintert.

Das Hartmetall zeigt folgende Kennwerte:

Porosität A<02 B00 C00
Dichte 14,43 g/cm$^3$
MS 130 * 10$^{-7}$Tm$^3$/kg
HcJ 44,86 kA/m
HV30 2023

Beispiel 5:

In einem Wirbelschichtreaktor mit einem Durchmesser von 150 mm wurden 7,5 kg pulverförmiges, technisches Wolframblauoxid mit einer Partikelgröße von etwa 12 µm (FSSS) unter Argon-Spülung (32 l/min) fluidisiert, innerhalb von 55 Minuten auf 250°C erhitzt und bei dieser Temperatur 50 Minuten gehalten, um restliches, im technischen Wolframblauoxid enthaltenes Ammoniak auszutreiben. Danach wurde das Wolframblauoxid innerhalb von 1,5 Stunden bis auf 640°C aufgeheizt. Nach Erreichen dieser Temperatur wurde die Reaktion gestartet. Dabei wurde dem Argon das Reaktionsgas aus 80 Vol.-% Kohlenmonoxid und 20 Vol.-% Wasserstoff zugemischt. Um dabei den Gasgesamtdurchfluß auf ca. 32 l/min konstant zu halten, wurde der Durchfluß des Argons schrittweise verringert (in 5-10 Minuten jeweils um 1-2 l/min) und er Durchfluß des Reaktionsgases in diesem Ausmaß erhöht.

Das Pulver wurde vom Beginn der Reaktion innerhalb von 4 Stunden auf 820°C erhitzt. Der Gaswechsel dauerte 8,7 Stunden. Der gesamte Gasdurchfluß betrug dann 32 l/min Kohlenmonoxid und 8 l/min Wasserstoff. Innerhalb von 2,5 Stunden wurde der Reaktionsgasdurchfluß schrittweise weiter auf 38 l/min Kohlenmonoxid und 9,5 l/min Wasserstoff erhöht. Nach einer Reaktionszeit von insgesamt 17 Stunden wurde unter Argonspülung abgekühlt.

Das erhaltene Wolframcarbid hatte folgende Zusammensetzung:

O: 0,25%
$C_{tot}$: 5,97 %
$C_{frei}$: 0,02%
FSSS ASTM B 330 - 88: 3,25 µm
FSSS lab milled ASTM B 430 : 0,89 µm
Por as: 0,8
Por lm: 0,58
BET: 1,96 m$^2$/g
Gitterkonstante a: 2,90 Å $\pm$ 0,01 Å
Gitterkonstante c: 2,86 Å $\pm$ 0,01 Å

**Patentansprüche**

1.  Verfahren zur Herstellung von Wolframcarbid durch Gasphasendirektcarburierung eines pulverförmigen, wolframoxidhältigen Ausgangsmaterials, wobei das Ausgangsmaterial bei erhöhter Temperatur mit einem Reaktionsgas umgesetzt wird, **dadurch gekennzeichnet, dass** das wolframoxidhältige Ausgangsmaterial auf mindestens 600°C erhitzt und anschließend unter Steigerung der Temperatur auf eine Höchsttemperatur von maximal 850°C mit dem Reaktionsgas umgesetzt wird, wobei ein Reaktionsgas eingesetzt wird, das aus CO besteht oder ein CO/ $H_2$-Gasgemisch mit bis zu 20 Vol.% $H_2$ ist.

2.  Verfahren nach Anspruch 1, **dadurch gekennzeichnet, dass** es einstufig ausgeführt wird.

3.  Verfahren nach einem der Ansprüche 1 oder 2, **dadurch gekennzeichnet, dass** das Ausgangsmaterial unter Schutzgas auf mindestens 600°C erhitzt wird.

**4.** Verfahren nach einem der Ansprüche 1 bis 3, **dadurch gekennzeichnet, dass** das Ausgangsmaterial mit einer Geschwindigkeit von 40 - 55°C/h auf die Höchststemperatur erhitzt wird, während es mit dem Reaktionsgas umgesetzt wird.

**5.** Verfahren nach einem der Ansprüche 1 bis 4, **dadurch gekennzeichnet, dass** das Ausgangsmaterial vor der Reaktion mit chromhältigen und/oder vanadinhättigen Verbindungen dotiert wird.

**6.** Verfahren nach einem der Ansprüche 1 bis 5, **dadurch gekennzeichnet, dass** es in einem Fließbett, insbesondere in einer Wirbelschicht, durchgeführt wird.

**7.** Wolframcarbid mit einem Gitterabstand x in c-Richtung von 2,850 < x ≤ 2,370 Angström, **dadurch gekennzeichnet, dass** der Gehalt an gebundenem Kohlenstoff im Bereich von 5,86 Gew.-% bis 6,08 Gew.-% ist und dass es einphasig ausgebildet ist.

**8.** Wolframcarbid nach Anspruch 7, **dadurch gekennzeichnet, dass** es in Plättchenform vorliegt und nach einem Verfahren gemäß einem der Ansprüche 1 bis 6 erhältlich ist, indem ein Reaktionsgas verwendet wird, welches aus CO besteht

**9.** Hartmetall, gefertigt unter Verwendung eines Wolframcarbids nach Anspruch 7 oder 8.

**Claims**

**1.** A method of producing tungsten carbide by gas phase direct carburization of a powdery, tungsten-oxide containing starting material, wherein the starting material is reacted with a reaction gas at an increased temperature, **characterized in that** the tungsten-oxide containing starting material is heated to at least 600°C and is then reacted with the reaction gas while increasing the temperature to a maximum temperature of up to 850°C, wherein a reaction gas is used which consists of CO or is a CO/$H_2$ gas mixture that contains up to 20% by volume of $H_2$.

**2.** A method according to claim 1, **characterized in that** it is carried out in one step.

**3.** A method according to any of claims 1 or 2, **characterized in that** the starting material is heated to at least 600°C in a protective gas atmosphere.

**4.** A method according to any of claims 1 to 3, **characterized in that** the starting material is heated to the maximum temperature at a rate of 40 - 55°C/h while being reacted with the reaction gas.

**5.** A method according to any of claims 1 to 4, **characterized in that** the starting material is doped with chromiferous and/or vanadiferous compounds prior to the reaction.

**6.** A method according to any of claims 1 to 5, **characterized in that** it is carried out in a fluidized bed.

**7.** A tungsten carbide having a lattice distance x in the c-direction of 2.850 < x ≤ 2.870 Angström, **characterized in that** the content of bound carbon is in the range of from 5.86% by weight to 6.08% by weight and that it is monophasic.

**8.** A tungsten carbide according to claim 7, **characterized in that** it is provided in the form of platelets and is obtainable in accordance with a method according to any of claims 1 to 6, wherein a reaction gas consisting of CO is used.

**9.** A hard metal manufactured by using a tungsten carbide according to claim 7 or 8.

**Revendications**

**1.** Procédé de fabrication de carbure de tungstène, par carburation directe en phase gazeuse d'un matériau initial se présentant sous forme pulvérulente, contenant de l'oxyde de tungstène, le matériau initial étant converti à température élevée avec un gaz de réaction, **caractérisé en ce que** le matériau initial contenant de l'oxyde de tungstène est chauffé à au moins 600°C et est ensuite converti, avec augmentation de la température jusqu'à une température de crête d'une valeur maximale de 850°C, avec le gaz de réaction, sachant qu'on utilise un gaz de réaction formé de CO ou un mélange de gaz CO/H$_2$, comprenant jusqu'à 20 % en volume de H$_2$.

2.  Procédé selon la revendication 1, **caractérisé en ce qu'**il est effectué en une étape.

3.  Procédé selon l'une des revendications 1 ou 2, **caractérisé en ce que** le matériau de départ est chauffé à au moins 600°C sous gaz protecteur.

4.  Procédé selon l'une des revendications 1 à 3, **caractérisé en ce que** le matériau initial est chauffé à une vitesse de chauffe de 40 à 55°C/heure à la température de crête, tandis qu'il est converti avec le gaz de réaction.

5.  Procédé selon l'une des revendications 1 à 4, **caractérisé en ce que** le matériau initial, avant la réaction, est dopé avec des combinaisons contenant du chrome et/ou contenant du vanadium.

6.  Procédé selon l'une des revendications 1 à 5, **caractérisé en ce qu'**il est mis en oeuvre dans un lit fluidisé, en particulier dans un lit tourbillonnant.

7.  Carbure de tungstène présentant un espacement de réseau x dans la direction c de 2,850 < x ≤ 2,870 angstrôm, **caractérisé en ce que** la teneur en carbone lié est dans la plage de 5,86 % en poids à 6,08 % en poids, et **en ce qu'**il est monophasique.

8.  Carbure de tungstène selon la revendication 7, **caractérisé en ce qu'**il se présente sous forme de plaquettes et est obtenu suivant un procédé selon l'une des revendications 1 à 6, en utilisant un gaz de réaction composé de CO.

9.  Métal dur, fabriqué en utilisant un carbure de tungstène selon la revendication 7 ou 8.

**Zusammenhang Gaszusammensetzung - Korngröße**

FIG. 1